# EUROPEAN PATENT SPECIFICATION

(11) **EP 4 749 394 B1**
(45) Date of publication and mention of the grant of the patent: **23.09.2026**
(21) Application number: 24214105.9
(22) Date of filing: 20.11.2024
(51) Int. Cl.: G06F 1/20, G06F 1/3206, G06F 1/324, H05K 7/20, G06F 1/16, G06F 1/3215, G06F 1/3234, G06F 1/3287, G06F 1/3296

(54) **METHOD AND SYSTEM FOR THERMAL MANAGEMENT OF WIRELESS COMMUNICATION DEVICES**
VERFAHREN UND SYSTEM ZUR WÄRMEVERWALTUNG VON DRAHTLOSEN KOMMUNIKATIONSVORRICHTUNGEN
PROCÉDÉ ET SYSTÈME DE GESTION THERMIQUE DE DISPOSITIFS DE COMMUNICATION SANS FIL

(43) Date of publication of application: 27.05.2026
(73) Proprietor: Rolling Wireless S.À R.L., 1717 Luxembourg (LU)
(72) Inventor: ZHANG, Chen, L-1717 Luxembourg (LU); XU, Wei, L-1717 Luxemburg (LU)
(74) Representative: Dennemeyer & Associates S.A.

(56) References cited:
- US-A1- 2015 000 889
- US-A1- 2021 216 216

## Description

### Field of the Invention

The present invention relates to thermal management and thermal mitigation, and particularly, although not exclusively, to method and system for thermal management of wireless communication devices.

### Background

With rapid development in technical fields like smart phones, electric vehicles, Internet of Things, and wearable smart devices, there always are huge demands for wireless communication devices that provide ever increasing data throughput and processing power. However, as wireless communication devices have bigger physical memory size and stronger processing capabilities in order to cope with end needs, thermal management of wireless communication devices becomes more and more challenging. If circuits and semiconductor components of a wireless communication device operate at an environmental temperature that deviates from the design range or even exceeds the anti-overheating threshold, this may cause the wireless communication device to suffer from performance downgrading, malfunctioning, or even shutting down. So it is important to make sure that the wireless communication device, at least its critical parts, operates within specified temperature range. To fulfil this task, thermal management of a wireless communication device has to deal with several challenges in terms of practical implementations. Wireless communication devices may be implemented for different uses, such as communication baseband chips of smart phones for Long Term Evolution (LTE) network and 5th Generation (5G) network, vehicle-to-everything (V2X) communication chips of electric vehicles, communication modules for wearable smart devices like smart watches and smart glasses. Depending on the specific use for a wireless communication device, it may have different heat dissipation capacities, and ambient temperature may have different impacts on it. Also, wireless communication devices usually cooperate with other components, such as central processing unit (CPU), data processing unit (DPU), graphics processing unit (GPU) and memories, so thermal management of wireless communication devices has to take into consideration temperatures of other components that interact with wireless communication devices to achieve optimal effects. Therefore, thermal management of a wireless communication device has to adapt to flexible settings of interactive components with respect to the wireless communication device, and is better to afford an extendable framework that allows the wireless communication device to cooperate with different components that are deployed on the same System on Chip (SOC) with the wireless communication device, or, outside of the SOC but still interacting with the wireless communication device, while maintaining superior thermal management effects. Also, thermal management of a wireless communication device is better to be able to provide quick response and quick deployment, because the wireless communication device may be mounted onto different setups, such as mounted onto different car models, or different smart phone products.

Wireless communication devices, in practical implementations, may be implemented for different uses, and may be deployed in various settings of interactive adjacent components, and may be deployed in different setups like different models or different products. Therefore, thermal management of wireless communication devices is better to impose a dynamic standard rather than a static standard, to be adaptive to complicated and flexible implementations, and capable of affording quick response and quick deployment.

US 2015/000889 A1 relates to an electronic system that performs thermal management during its operation by proactively taking into account expected solar thermal loading. According to one embodiment, the electronic system determines its location and a solar thermal load value expected to affect its location. The system also determines a temperature offset value based on the solar thermal load value and predicts a future temperature for the system based on the temperature offset value and a then-current temperature for the system (e.g., as may be detected by one or more temperature sensors). The electronic system compares the predicted temperature to at least one threshold and executes a thermal mitigation procedure in the event that the predicted temperature exceeds one or more of the thresholds. According to another embodiment in which the electronic system is transportable, the determined solar thermal load value may include a solar thermal load profile for the system's expected route of travel.

US 2021/216216 A1 relates to exemplary methods, apparatuses, and systems including a media temperature manager receiving operating temperature measurements for a memory subsystem. The media temperature manager generates an average temperature using the operating temperature measurements. The media temperature manager determines that the average temperature satisfies a first value for a dynamic temperature threshold. The dynamic temperature threshold indicates a temperature at which the memory subsystem throttles media operations. The media temperature manager increases the dynamic temperature threshold to a second value in response to the average temperature satisfying the first value for the dynamic temperature threshold.

The present invention has been devised in light of the above considerations.

### Summary of the Invention

The invention is set out in the appended set of claims. In accordance with a first aspect of the present disclosure, a method for thermal management of a wireless communication device is provided. The method includes: obtaining a plurality of thermal readings by a plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation; for each of the plurality of thermal sensors respectively, determining whether to perform the corresponding thermal mitigation operation, based on comparing the thermal reading of the thermal sensor and the corresponding second level thermal threshold; for each of the plurality of thermal sensors respectively, determining whether to perform the corresponding thermal pre-mitigation action, base on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

With reference to the first aspect of the present disclosure, the thermal management of the wireless communication device may be adapted flexibly to account for complicated implementations and requirements for quick response as well as quick deployment.

In accordance with the first aspect of the present disclosure, in a manner of implementation, for each of the plurality of thermal sensors respectively, the thermal sensor contributes to the thermal trending prediction indicated by the one or more thermal trending events associated with the thermal sensor.

In accordance with the first aspect of the present disclosure, in a manner of implementation, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event.

In accordance with the first aspect of the present disclosure, in a manner of implementation, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor.

In accordance with the first aspect of the present disclosure, in a manner of implementation, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor.

In accordance with the first aspect of the present disclosure, in a manner of implementation, for each of the plurality of thermal sensors respectively, the corresponding first level thermal threshold is lower than the corresponding second level thermal threshold, the corresponding thermal mitigation operation, when preformed, causes a greater performance downgrade than one caused by the corresponding thermal pre-mitigation action when performed.

In accordance with the first aspect of the present disclosure, in a manner of implementation, the plurality of thermal trending events correspond to a plurality of pre-mitigation exit event. The method further include: in response to detecting any one out of the plurality of pre-mitigation exit event, restoring performed thermal pre-mitigation action(s) that is determined based on thermal trending event(s) corresponding to the pre-mitigation exit event.

In accordance with the first aspect of the present disclosure, in a manner of implementation, the application status of the wireless communication device indicate a plurality of application scenarios that the wireless communication device matches, the plurality of thermal trending events correspond to the plurality of application scenarios respectively.

In accordance with the first aspect of the present disclosure, in a manner of implementation, the plurality of application scenarios include voice call over LTE, large data uploading, large data downloading, V2X stack running with heavy computing.

In accordance with the first aspect of the present disclosure, in a manner of implementation, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature.

In accordance with a second aspect of the present disclosure, a system for thermal management of a wireless communication device is provided. The system includes: a processor communicatively coupled to a plurality of thermal sensors and a non-transitory memory , wherein the non-transistor memory stores computer code that is operable, when executed by the processor, to cause the process to: obtaining a plurality of thermal readings by the plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation; for each of the plurality of thermal sensors respectively, determining whether to perform the corresponding thermal mitigation operation, based on comparing the thermal reading of the thermal sensor and the corresponding second level thermal threshold; for each of the plurality of thermal sensors respectively, determining whether to perform the corresponding thermal pre-mitigation action, base on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

With reference to the second aspect of the present disclosure, the thermal management of the wireless communication device may be adapted flexibly to account for complicated implementations and requirements for quick response as well as quick deployment.

In accordance with the second aspect of the present disclosure, in a manner of implementation, for each of the plurality of thermal sensors respectively, the thermal sensor contributes to the thermal trending prediction indicated by the one or more thermal trending events associated with the thermal sensor.

In accordance with the second aspect of the present disclosure, in a manner of implementation, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event.

In accordance with the second aspect of the present disclosure, in a manner of implementation, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor.

In accordance with the second aspect of the present disclosure, in a manner of implementation, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor.

In accordance with the second aspect of the present disclosure, in a manner of implementation, for each of the plurality of thermal sensors respectively, the corresponding first level thermal threshold is lower than the corresponding second level thermal threshold, the corresponding thermal mitigation operation, when preformed, causes a greater performance downgrade than one caused by the corresponding thermal pre-mitigation action when performed.

In accordance with the second aspect of the present disclosure, in a manner of implementation, the plurality of thermal trending events correspond to a plurality of pre-mitigation exit event. The method further include: in response to detecting any one out of the plurality of pre-mitigation exit event, restoring performed thermal pre-mitigation action(s) that is determined based on thermal trending event(s) corresponding to the pre-mitigation exit event.

In accordance with the second aspect of the present disclosure, in a manner of implementation, the application status of the wireless communication device indicate a plurality of application scenarios that the wireless communication device matches, the plurality of thermal trending events correspond to the plurality of application scenarios respectively.

In accordance with the second aspect of the present disclosure, in a manner of implementation, the plurality of application scenarios include voice call over LTE, large data uploading, large data downloading, V2X stack running with heavy computing.

In accordance with the second aspect of the present disclosure, in a manner of implementation, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** is a block diagram illustrating an example wireless communication device as a communication baseband chip for a smartphone with thermal management according to some embodiments.
**Figure 2** is a block diagram illustrating an example wireless communication device as a V2X communication chip of an electric vehicle with thermal management according to some embodiments.
**Figure 3** depicts a method for thermal management of a wireless communication device according to some embodiments.
**Figure 4** depicts a method for device thermal calibration according to some embodiments.
**Figure 5** depicts a system for thermal management of a wireless communication device according to some embodiments.
**Figure 6** is a block diagram illustrating a plurality of thermal sensors associated with a wireless communication device according to some embodiments.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

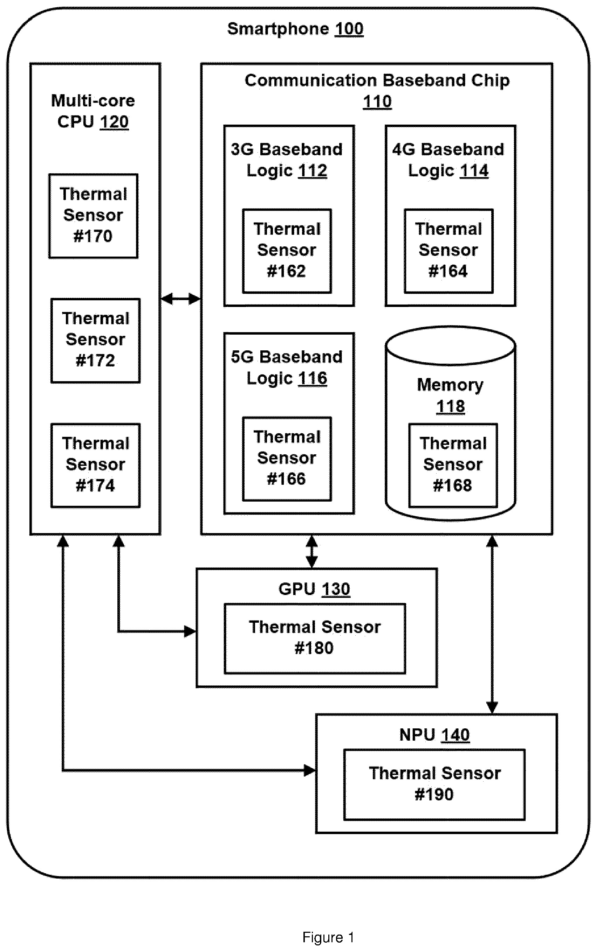

Referring to **Figure 1, Figure 1** is a block diagram illustrating an example wireless communication device as a communication baseband chip 110 for a smartphone 100 with thermal management according to some embodiments. As depicted, the smartphone 100 includes the following elements: a communication baseband chip 110, a multi-core CPU 120, a GPU 130, and a neural-network processing unit (NPU) 140. The communication baseband chip 110 serves as the wireless communication device for the smartphone 100, and provides a variety of functions associated with various communication protocols. The communication baseband chip 110 includes a 3th Generation (3G) Baseband Logic 112 for 3G communications, a 4th Generation (4G) Baseband Logic 114 for 4G communications, and a 5G Baseband Logic 116 for 5G communications. The communication baseband chip 110 also includes a memory 118 for providing physical storage space. The multi-core CPU 120 is deployed outside the communication baseband chip 110 and interacts with the communication baseband chip 110 to provide central processing capabilities. The GPU 130 is also deployed outside the communication baseband chip 110 and interacts with the communication baseband chip 110 to provide graphics-related processing capabilities. The NPU 140 is also deployed outside the communication baseband chip 110 and interacts with the communication baseband chip 110 to provide neural-network-related processing capabilities. In practical implementations, the wireless communication device of smartphone 100, i.e., the communication baseband chip 110, may be manufactured on the same SOC with other interactive processors like the multi-core CPU 120, the GPU 130, and the NPU 140, or, alternatively, may be manufactured on a separate SOC. The situation where those processors of smartphone 100 are manufactured on the same SOC is typically seen when the maker of the smartphone 100 has strong integrated circuit (IC) design powers sufficient to design its own processors for various specified uses, while, the situation where the communication baseband chip 110 and other processors are manufactured on different and separate SOCs is typically seen when the maker of the smartphone 100 purchased specialized processors from different providers, like purchasing the GPU 130 from one provider and the NPU 140 from another provider. Whether these processors are on the same SOC or on different SOCs, physical distances between two interactive processors or chips must be sufficiently short in order to maintain high data transmission speed and stable chip-to-chip communication quality, this means that those processors interactive with the communication baseband chip 110, when in operation, will generate heat that will impact the communication baseband chip 110. Therefore, thermal management of the communication baseband chip 110, not only has to consider temperatures of components within the communication baseband chip 110, but also has to consider temperatures of components that are outside the communication baseband chip 110 and interact with the communication baseband chip 110 in order to achieve optimal effects.

Still referring to **Figure 1****,** smartphone 100 has a plurality of thermal sensors, each of the plurality of thermal sensors is configured for providing a thermal reading respectively. As depicted, within the communication baseband chip 110, a thermal sensor #162 provides a thermal reading for the 3G Baseband Logic 112, a thermal sensor #164 provides a thermal reading for the 4G Baseband Logic 114, a thermal sensor #166 provides a thermal reading for the 5G Baseband Logic 116, and, a thermal sensor #168 provides a thermal reading for the memory 118. By collecting data recorded by a set of thermal sensors deployed within the communication baseband chip 110, these data, i.e., the thermal readings, may be processed according to certain algorithms, models, or programs, so as to provide a basis for judgment for thermal management. Similarly, a set of thermal sensors is provided for components that are outside the communication baseband chip 110 but interact with the communication baseband chip 110, that generate heat in operation and impact the performance of the communication baseband chip 110. As depicted, for the multi-core CPU 120, a thermal sensor #170, a thermal sensor #172, and a thermal sensor #174 are provided. This is because the multi-core CPU 120 has several processing cores, for example, three processing cores, so each processing core is assigned a thermal sensor to monitor a thermal reading of the respective processing core. A thermal sensor #180 is provided to monitor a thermal reading of the GPU 130, and, a thermal sensor #190 is provided to monitor a thermal reading of the NPU 140. It should be understood that, the thermal sensors and the processors' setup of the smartphone 100 as depicted in **Figure 1** are illustrated only, and should not be considered as limiting. A smartphone may has a processors' setup that is different from the smartphone 100, for example, one may have more NPUs to strengthen the Artificial Intelligence (A.I.) abilities; for another example, one may have secondary digital signal processor (DSP) to strengthen voice signal processing abilities; for still another example, one may have additional Radio Frequency (RF) circuits to raise RF capability limitation.

Still referring to **Figure 1****,** thermal management of a wireless communication device which is the communication baseband chip 110 for the smartphone 100, has to deal with several challenges in practical implementations in order for achieving quick response, quick deployment, and adaptive to complicated and flexible implementations. For example, the wireless communication device like the communication baseband chip 110, may be implemented for different uses, and therefore may have different heat dissipation capacities, while ambient temperature may have different impacts on thermal management of the wireless communication device. Also, the wireless communication device may be deployed in various settings of interactive adjacent components, such as the multi-core CPU 120 interacts with the communication baseband chip 110, therefore, thermal management of wireless communication devices has to take into consideration temperatures of other components that interact with wireless communication devices to achieve optimal effects. Also, the wireless communication device may be deployed in different setups like different models or different products. Therefore, thermal management of wireless communication devices is better to impose a dynamic standard rather than a static standard, to be adaptive to complicated and flexible implementations, and capable of affording quick response and quick deployment. This disclosure provides a method for thermal management of a wireless communication device and a system for thermal management of a wireless communication device, and, with references to example embodiments and drawings, the following detailed description will explain how the method and the system as provided by the disclosure effectively deal with the challenges faced by a wireless communication device such as the communication baseband chip 110 in details.

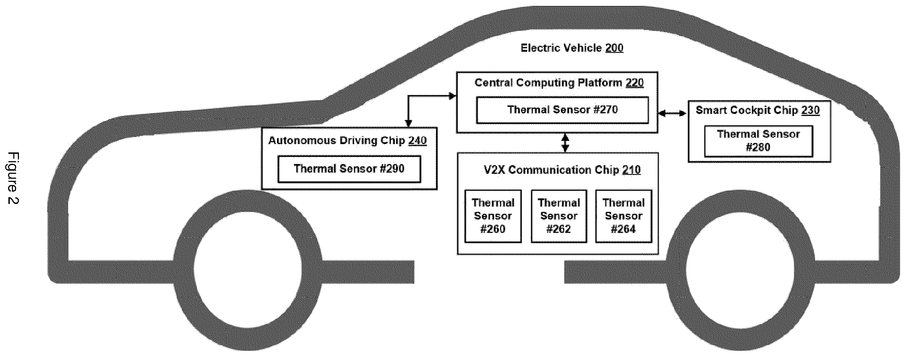

Referring to **Figure 2, Figure 2** is a block diagram illustrating an example wireless communication device as a V2X communication chip 210 of an electric vehicle 200 with thermal management according to some embodiments. As depicted, the V2X communication chip 210 interacts with the central computing platform 220, and the central computing platform 220 interacts with the autonomous driving chip 240 and the smart cockpit chip 230. The electric vehicle 200 has a plurality of thermal sensors, each of the plurality of thermal sensors is configured for providing a thermal reading respectively. As depicted, within the V2X communication chip 210, a thermal sensor #260, a thermal sensor #262, and a thermal sensor #264, each provides a thermal reading. While not shown on the drawing, the V2X communication chip 210 has a memory, data processing circuits, and circuits for V2X communications. The thermal sensors of the V2X communication chip 210 are deployed within the V2X communication chip 210, and may be set to provide thermal readings for components and circuits inside the V2X communication chip 210. By collecting data recorded by a set of thermal sensors deployed within the V2X communication chip 210, these data, i.e., the thermal readings, may be processed according to certain algorithms, models, or programs, so as to provide a basis for judgment for thermal management. Similarly, a set of thermal sensors is provided for components that are outside the V2X communication chip 210 but interact with the V2X communication chip 210, that generate heat in operation and impact the performance of the V2X communication chip 210. As depicted, for the central computing platform 220, a thermal sensor #270 is provided. For the autonomous driving chip 240, a thermal sensor #290 is provided. For the smart cockpit chip 230, a thermal sensor #280 is provided. While the V2X communication chip 210 serves as the wireless communication device for the electric vehicle 200, the operation of the V2X communication chip 210 is closely tied to the operations of interactive components. The central computing platform 220 provides overall controlling of the elective vehicle 200 and is tasked with general computing missions. The autonomous driving chip 240 is tasked with auto-driving missions, and the smart cockpit chip 230 is tasked with smart-cockpit related missions, such as controlling internal temperatures and adjusting the seats. Like the communication baseband chip 110 for the smartphone 100 as depicted in **Figure 1****,** here, the V2X communication chip 210 of the electric vehicle 200 is subject to impacts from components that are outside but interact with the wireless communication device. One reason behind this is that there components are usually manufactured on the same integrated-circuit board together with the wireless communication device, therefore, temperatures of these components need to be calculated in order for optimizing thermal management of the wireless communication device.

Still referring to **Figure 2****,** thermal management of a wireless communication device which is the V2X communication chip 210 for the electric vehicle 200, has to deal with several challenges in practical implementations in order for achieving quick response, quick deployment, and adaptive to complicated and flexible implementations. For example, the wireless communication device like the V2X communication chip 210, may be implemented for different uses, and therefore may have different heat dissipation capacities, while ambient temperature may have different impacts on thermal management of the wireless communication device. Also, the wireless communication device may be deployed in various settings of interactive adjacent components, such as the central computing platform 220 interacts with the V2X communication chip 210, therefore, thermal management of wireless communication devices has to take into consideration temperatures of other components that interact with wireless communication devices to achieve optimal effects. Also, the wireless communication device may be deployed in different setups like different models or different products. Therefore, thermal management of wireless communication devices is better to impose a dynamic standard rather than a static standard, to be adaptive to complicated and flexible implementations, and capable of affording quick response and quick deployment. This disclosure provides a method for thermal management of a wireless communication device and a system for thermal management of a wireless communication device, and, with references to example embodiments and drawings, the following detailed description will explain how the method and the system as provided by the disclosure effectively deal with the challenges faced by a wireless communication device such as the V2X communication chip 210 in details.

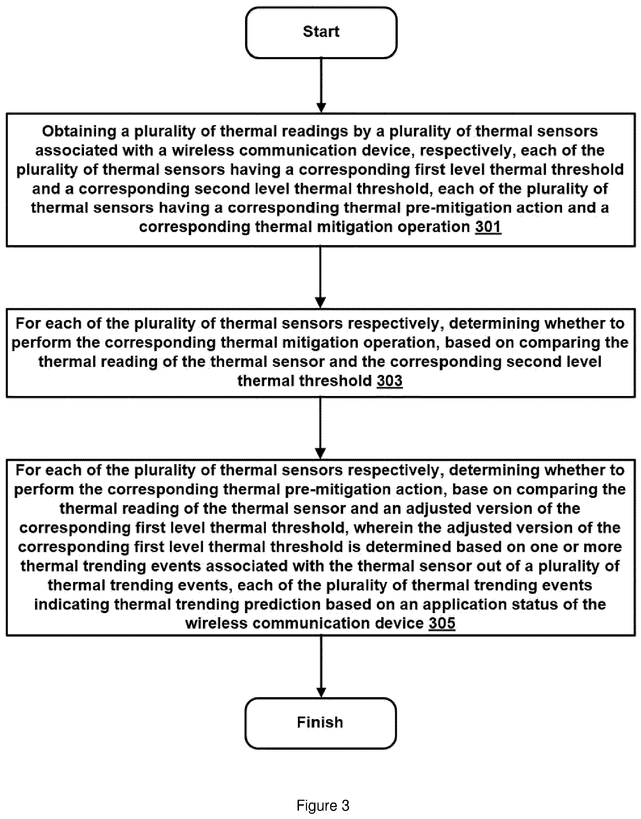

Referring to **Figure 3, Figure 3** depicts a method for thermal management of a wireless communication device according to some embodiments. The method includes the following steps.

Step 301: obtaining a plurality of thermal readings by a plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation.

Step 303: for each of the plurality of thermal sensors respectively, determining whether to perform the corresponding thermal mitigation operation, based on comparing the thermal reading of the thermal sensor and the corresponding second level thermal threshold.

Step 305: for each of the plurality of thermal sensors respectively, determining whether to perform the corresponding thermal pre-mitigation action, base on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

Still referring to **Figure 3** and above-mentioned steps of the method for thermal management of the wireless communication device, at step 301, the method includes obtaining a plurality of thermal readings by a plurality of thermal sensors associated with a wireless communication device. The plurality of thermal sensors are associated with the wireless communication device, and the thermal readings of these thermal sensors are obtained and processed in a specific way so as to provide basis for judgements in thermal management of the wireless communication devices. Each thermal sensor has a corresponding first level thermal threshold and a corresponding second level thermal threshold. Also, each thermal sensor has a corresponding thermal pre-mitigation action and a corresponding thermal mitigation operation. Here, a thermal mitigation operation is an operation that is performed in order to prevent the wireless communication device from overheating, which then may cause the wireless communication device to malfunction or out of service. The wireless communication device may be overheating at different key components or parts, like its memory, its central processor, its subsidiary processor, or others. Take the communication baseband chip 110 of **Figure 1** for example, the memory 118 may be the cause of overheating and therefore the thermal reading by the thermal sensor #168 is relevant to thermal management; the 5G baseband logic 116 may be the cause of overheating and therefore the thermal reading by the thermal sensor #166 is relevant to thermal management. Also, depending on the operational mechanism of the wireless communication device, components that are outside the wireless communication device but interact with the wireless communication device may also be the cause of overheating of the wireless communication device, such as NPU 140 may be the cause of the communication baseband chip 110 overheating. Depending on the specific component, circuit, or device that the respective thermal sensor is tied to, the corresponding thermal mitigation operation may vary. For example, if the thermal sensor provides a thermal reading of a central processing unit (CPU), the corresponding thermal mitigation operation is turning off the CPU; if the thermal sensor provides a thermal reading of a modem or a baseband logic (like the 5G baseband logic 116 of **Figure 1****),** the corresponding thermal mitigation operation is dropping the cellular communication and terminating a calling; if the thermal sensor provides a thermal reading of an audio digital signal processor (DSP), the corresponding thermal mitigation operation is stopping audio processing. On one hand, performing a thermal mitigation operation, prevents the wireless communication device from overheating, and consequently prevents the wireless communication device from falling into a state of malfunctioning or under unnecessary functional limitations like out of service; however, on the other hand, performing the thermal mitigation operation causes performance downgrading of the wireless communication device, and may temporarily stop ongoing missions. Accordingly, for a respective thermal sensor, the corresponding thermal mitigation operation is considered a safeguard for prevention of overheating, and is a safe check with top priority of the thermal management of the wireless communication device.

Still referring to **Figure 3** and above-mentioned steps of the method for thermal management of the wireless communication device, in comparison with a thermal mitigation operation, that is performed in order to prevent the wireless communication device from overheating, a thermal pre-mitigation action is an action that is proactively performed based on thermal trending prediction. Depending on the specific component, circuit, or device that the respective thermal sensor is tied to, the corresponding thermal pre-mitigation action may vary. For example, if the thermal sensor provides a thermal reading of a CPU, the corresponding thermal mitigation operation is turning off the CPU, while, the corresponding thermal pre-mitigation action is downgrading operating frequency of the CPU; if the thermal sensor provides a thermal reading of a modem or a baseband logic (like the 5G baseband logic 116 of **Figure 1****),** the corresponding thermal mitigation operation is dropping the cellular communication and terminating a calling, while, the corresponding thermal pre-mitigation action is download rate throttling or receiving fallback; if the thermal sensor provides a thermal reading of an audio DSP, the corresponding thermal mitigation operation is stopping audio processing, while, the corresponding thermal pre-mitigation action is profile adjusting. Accordingly, performing the thermal pre-mitigation action causes performance downgrading of the wireless communication device, in a lesser degree, compared with that caused by performing the thermal mitigation operation, but still affords the benefits of containing the temperature, reducing heat generation, and potentially mitigating impact by surrounding components on the wireless communication device.

Still referring to **Figure 3** and above-mentioned steps of the method for thermal management of the wireless communication device, at step 303, the method includes: for each of the plurality of thermal sensors respectively, determining whether to perform the corresponding thermal mitigation operation, based on comparing the thermal reading of the thermal sensor and the corresponding second level thermal threshold. As mentioned above, each of the plurality of thermal sensors has a corresponding first level thermal threshold and a corresponding second level thermal threshold. For each thermal sensor respectively, the corresponding second level thermal threshold is compared with the thermal reading of the thermal sensor, so as to provide basis for judgements in thermal management of the wireless communication devices, that is, whether to perform the corresponding thermal mitigation operation. For a respective thermal sensor, the corresponding thermal mitigation operation is considered a safeguard for prevention of overheating, and is a safe check with top priority of the thermal management of the wireless communication device. With a series of thermal sensors placed in the wireless communication device and its surrounding components, the thermal readings from the series of thermal sensors are periodically read to consecutively monitor the temperatures at several key positions. These thermal sensors are tied to certain component, circuit, or device, and are mapped to pre-defined temperature thresholds, i.e., the corresponding second level thermal threshold, and are also mapped to overheating prevention measures, i.e., the corresponding thermal mitigation operation. When critical temperature conditions are triggered, such as one or more thermal readings reach the pre-defined mitigation thresholds, this warrants performing one or more thermal mitigation operations correspondingly. Accordingly, the method for thermal management of the wireless communication device is beneficial to fulfilling the task of making sure that the wireless communication device, at least its critical parts, operates within specified temperature range.

Still referring to **Figure 3** and above-mentioned steps of the method for thermal management of the wireless communication device, at step 305, for each of the plurality of thermal sensors respectively, determining whether to perform the corresponding thermal pre-mitigation action, base on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device. As mentioned above, each of the plurality of thermal sensors has a corresponding first level thermal threshold and a corresponding second level thermal threshold. For each thermal sensor respectively, an adjusted version of the corresponding first level thermal threshold is compared with the thermal reading of the thermal sensor, so as to provide basis for judgements in thermal management of the wireless communication devices, that is, whether to perform the corresponding thermal pre-mitigation action. Therefore, while the corresponding second level thermal threshold, a pre-defined thermal mitigation threshold, is directly compared with the thermal reading to determine whether to perform the corresponding thermal mitigation operation, here, the corresponding first level thermal threshold is not directly compared with the thermal reading, but instead, an adjusted version of the corresponding first level thermal threshold is treated as a thermal pre-mitigation threshold and is compared with the thermal reading to determine whether to perform the corresponding thermal pre-mitigation action. The adjusted version of the corresponding first level thermal threshold is determined based on one or more thermal trending events associated with the thermal sensor out of a plurality of thermal trending events. Each of the plurality of thermal trending events indicates thermal trending prediction based on an application status of the wireless communication device.

Still referring to **Figure 3** and above-mentioned steps of the method for thermal management of the wireless communication device, different thermal sensor is tied to different component, circuit, or device, and may utilize different standard for selecting thermal trending events out of the plurality of thermal trending events. Therefore, for a respective thermal sensor, the adjusted version of the corresponding first level thermal threshold is determined based on one or more thermal trending events associated with the respective thermal sensor. Some thermal trending events may be associated with a thermal sensor but not with another thermal sensor. This is because each thermal trending event indicates thermal trending prediction based on an application status of the wireless communication device, and each thermal trending event may contribute to the heat generation by a different degree. As such, the application status of the wireless communication device is used to determine how each thermal trending event indicates thermal trending prediction, and by a certain standard for selecting thermal trending events, one or more thermal trending events that is associated with the thermal sensor is selected out of a plurality of thermal trending events. Taking the communication baseband chip 110 for the smartphone 100 of **Figure 1** for example, the 4G baseband logic 114 and the 5G baseband logic 116 are used for providing 4G communication and 5G communication. When the communication baseband chip 110 is operating in an application status of uploading large data, or, downloading large data, this means that big data is transmitted in 4G frequency band and 5G frequency band, and therefore the 4G baseband logic 114 and the 5G baseband logic 116 are the main contributors to the heat generation, as compared to other components like 3G baseband logic 112 and the memory 118. Accordingly, for an application status of uploading large data, or, downloading large data, some thermal trending events are considered as playing a more important role with respect to thermal trending prediction than other thermal trending events, out of the plurality of thermal trending events, and consequently, a thermal sensor associated with these thermal trending events which play important roles and its thermal reading should carry more weight. The adjusted version of the corresponding first level thermal threshold may be calculated to reflect that the respective thermal sensor and its thermal reading carry more weight in terms of thermal management. In one example embodiment, the adjusted version of the corresponding first level thermal threshold is set to be a certain percentage smaller, like 5%, than the corresponding first level thermal threshold, so that it becomes easier to trigger the corresponding thermal pre-mitigation action. Accordingly, when the communication baseband chip 110 for the smartphone 100 of **Figure 1** is operating in an application status of uploading large data, or, downloading large data, the pre-defined thermal pre-mitigation thresholds for comparison with thermal readings from the thermal sensor #164 of the 4G baseband logic 114 and the thermal sensor #166 of the 5G baseband logic 116, i.e., the adjusted version of the corresponding first level thermal threshold, are set to be lower than the corresponding first level thermal threshold, in order for reflecting that the 4G baseband logic 114 and the 5G baseband logic 116 have major impact on the heat generation while others have minor impact. By taking the application status of the wireless communication device into calculation, and by determining the adjusted version of the corresponding first level thermal threshold based on thermal trending events associated with the respective thermal sensor, the heating trend of the wireless communication device is slowed down more effectively, the pre-mitigation measures may be started earlier, and the thermal management is dynamically adapted to the application status. It should be noticed that, if the wireless communication device is operating in a different application status, other than uploading large data, or, downloading large data, then, a different standard for selecting thermal trending events may be applied, and other thermal sensors, other than the thermal sensor #164 of the 4G baseband logic 114 and the thermal sensor #166 of the 5G baseband logic 116, may have major impact, because different component or device becomes major contributor to the heat generation. For example, if the wireless communication device is operating in an application status of heavy artificial intelligence computing, this means that a lot of neural processing is performed, therefore, the thermal sensor #190 of the NPU 140 has major impact and an adjusted version of the corresponding first level thermal threshold with respect to the thermal sensor #190 is determined consequentially. For another example, if the wireless communication device is operating in an application status of move playing or high-definition image browsing, this means that a lot of graphic processing is performed, therefore, the thermal sensor #180 of the GPU 130 has major impact and an adjusted version of the corresponding first level thermal threshold with respect to the thermal sensor #180 is determined consequentially. Additionally, not only the adjusted version of the corresponding first level thermal threshold is determined based on one or more thermal trending events associated with the thermal sensor out of a plurality of thermal trending events, but also an adjusted version of the corresponding second level thermal threshold may be determined on the thermal trending events associated with the weighted thermal sensors. In other words, the "adjusted version" of the thermal threshold is not only applied to the corresponding first level thermal threshold, the second level thermal threshold can also have an adjusted version according to the weighted thermal sensors based on the trending events. This adds an additional level of flexibility to the method for thermal management, which allows it to implement thermal control more effectively and dynamically adapted to the application status.

In sum, the method for thermal management of the wireless communication device, as depicted in **Figure 3****,** provides a mechanism that provides both thermal pre-mitigation and thermal mitigation for thermal management of a wireless communication device. By mounting a set of thermal sensors associated with the wireless communication device and collecting a series of data recorded from thermal readings of these thermal sensors, a two-level determining algorithm is applied to process the thermal readings so as to form a basis for judgment for thermal management. This two-level determining algorithm includes a top level, in which one determines whether to perform the corresponding thermal mitigation operation, based on comparing the thermal reading of the thermal sensor and the corresponding second level thermal threshold, and this top level has top priority, therefore making sure that the wireless communication device is prevented from overheating and consequent negative results. The two-level determining algorithm also includes a secondary level, in which one determines whether to perform the corresponding thermal pre-mitigation action, base on comparing the thermal reading of the thermal sensor and an adjusted version of the corresponding first level thermal threshold. By taking the application status of the wireless communication device into calculation, and by determining the adjusted version of the corresponding first level thermal threshold based on thermal trending events associated with the respective thermal sensor, the heating trend of the wireless communication device is slowed down more effectively, the pre-mitigation measures may be started earlier, and the thermal management is dynamically adapted to the application status. Further, as the wireless communication device is operating in a different application status, a different standard for selecting thermal trending events such that the thermal management may focus on component or device that becomes major contributor to the heat generation of the wireless communication device in current application status. As the wireless communication device is implemented for different uses, or deployed in different settings, or deployed in different setups like models or products, the thermal management of the wireless communication device may be adapted flexibly to account for complicated implementations and requirements for quick response as well as quick deployment. The mitigation level accuracy may be improved by pre-defining the first level thermal thresholds and the second level thermal thresholds, taking into consideration the mapping relationships between the thermal sensors and thermal pre-mitigation thresholds, between the thermal sensors and thermal mitigation thresholds, between the thermal sensors and thermal pre-mitigation action, between the thermal sensors and thermal mitigation operations. Also, the mitigation level accuracy may be further improved based on thermal trending predictions, by using models from a combination of application status and relevant sensors to kick in some thermal pre-mitigation actions in advance, such that negative impact by the thermal mitigation operations is reduced, and the overall performance downgrading is also reduced. Accordingly, a mechanism of thermal mitigation for a wireless communication device is provided, the mechanism includes a set of thermal sensors mounted on and selectively surrounding the wireless communication device, a series of data recorded from the thermal readings of these thermal sensors, an algorithm for processing the thermal readings to predict device overheating, and a safeguard of thermal mitigation operations for prevention of overheating.

The method for thermal management of the wireless communication device, as depicted in **Figure 3****,** offers a solution to improve the precision of thermal management algorithm, therefore enhancing the performance across individual devices. The method includes a thermal prediction mechanism based on thermal trending predictions, for proactively launching some thermal pre-mitigation actions in advance, therefore, the heating trend of the wireless communication device is slowed down more effectively, the pre-mitigation measures may be started earlier, and the thermal management is dynamically adapted to the application status. This results in a less frequency and smaller possibility of performing thermal mitigation operations, which while prevents the wireless communication device from overheating but also causes performance downgrading of the wireless communication device, and may temporarily stop ongoing missions. The method focus on improvements on mitigation level accuracy and thermal trending prediction, various tools, models, algorithms may be used as long as they can help to achieve the designed goal and keep pace with the disclosed operational mechanism of the thermal management. For example, lookup tables, big data trained models, event-driven reactions, etc., may be used to improve mitigation level accuracy and thermal trending prediction. With reference to the method as depicted in **Figure 3****,** and using the illustrated example wireless communication devices of **Figure 1** and **Figure 2** as examples, one implementation of the present disclosure includes: building linkages of each thermal sensor with all thermal sensitive functions, setting up a matrix with all the thermal sensors and their associated functions with different performance levels with pre-configured thresholds, defining rules with some sensors and functions combinations that can continue generating heat to reach the thresholds as trending events, and monitoring the trending events in the running system, and, when such trending event occurs, checking the matrix to downgrade the performance of selected functions as pre-mitigation to slow down the heat generation. Also, the implementation may include continuously monitoring and returning back to full performance when pre-mitigation exit event happens.

It is noticed that, different measures of the pre-defined thermal mitigation may result in a different standard for selecting the trending events and the type of sensors. For example, there are thermal sensors A, B, and C, if a pre-defined thermal mitigation measure is taken, then sensors A and B are selected for contributing to trending events after measure A is performed. In contrast, if another measure is taken, then sensor C is selected for contributing to trending events after measure B is performed. Also, the present disclosure provides building the sensors linkage and the matrix to cooperate with the concerning applications with selected types of sensors. All sensors listed on the matrix may be assigned respective weights associated to defined application scenarios (e.g. VoLTE call, high throughput data downloading, Audio/Video streaming, GNSS position fixing, etc.). Assuming a specific thermal mitigation measure is performed, some sensors on the matrix are not selected sensors and therefore the sensor data from these sensors generally do not contribute to the temperature reading, so the weights for these sensors may set to zero or greatly reduced. Meanwhile, sensors that are selected for contributing to trending events will continue to contribute to the temperature reading, assuming the specific thermal mitigation measure is performed. Therefore, the weights for selected sensors may be maintained or greatly increased.

In some example embodiments, for each of the plurality of thermal sensors respectively, the thermal sensor contributes to the thermal trending prediction indicated by the one or more thermal trending events associated with the thermal sensor. Accordingly, the thermal management of the wireless communication device is improved and imposes a dynamic standard rather than a static standard, to be adaptive to complicated and flexible implementations, and capable of affording quick response and quick deployment.

In some example embodiments, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event. Accordingly, thermal sensors that contribute more may be assigned heavier weights than thermal sensors that contribute less. By using the assigned weights, it becomes easier to select thermal sensors that are main contributors, and this helps to determine whether and what pre-mitigation measures are taken. By taking the application status of the wireless communication device into calculation, and by determining the adjusted version of the corresponding first level thermal threshold based on thermal trending events associated with the respective thermal sensor, the heating trend of the wireless communication device is slowed down more effectively, the pre-mitigation measures may be started earlier, and the thermal management is dynamically adapted to the application status.

In some instances, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor. Accordingly, by increasing or decreasing a weight assigned to a respective thermal sensor, or by maintaining the weight, it becomes easier to reflect the changes of how the thermal sensors contribute to the temperature reading, and how those components tied to these thermal sensors contribute to the heat generation, and therefore, it improves the precision of thermal management algorithm and the mitigation level accuracy. By using models from a combination of application status and relevant sensors to kick in some thermal pre-mitigation actions in advance, such that negative impact by the thermal mitigation operations is reduced, and the overall performance downgrading is also reduced.

In some instances, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor. Accordingly, the adjusted version of the corresponding first level thermal threshold may be set to be a certain percentage smaller, like 5%, than the corresponding first level thermal threshold, so that it becomes easier to trigger the corresponding thermal pre-mitigation action. By having multiple levels, the adjusted version of the corresponding first level thermal threshold provides more flexibility in defining rules and setting strategies for thermal management. For example, the adjusted version of the corresponding first level thermal threshold may be set to be a series of percentages smaller, like 2%, 3%, 5%, 7%, 9%, 10%, than the corresponding first level thermal threshold, and the exact percentage is determined based on the exact level of the multiple levels. As such, as the adjusted version of the corresponding first level thermal threshold is assigned with a heavier weight, this shows that the respective thermal sensor makes more contribution or plays a more important role in the temperature reading, then it warrants using a higher level, like a higher percentage, for determining the adjusted version of the corresponding first level thermal threshold. Therefore, it helps to proactively kick in thermal pre-mitigation measures, therefore imposing a dynamic standard rather than a static standard, to be adaptive to complicated and flexible implementations, and capable of affording quick response and quick deployment.

In some example embodiments, for each of the plurality of thermal sensors respectively, the corresponding first level thermal threshold is lower than the corresponding second level thermal threshold, the corresponding thermal mitigation operation, when preformed, causes a greater performance downgrade than one caused by the corresponding thermal pre-mitigation action when performed. Accordingly, a thermal prediction mechanism based on thermal trending predictions is provided, for proactively launching some thermal pre-mitigation actions in advance, therefore, the heating trend of the wireless communication device is slowed down more effectively, the pre-mitigation measures may be started earlier, and the thermal management is dynamically adapted to the application status. This results in a less frequency and smaller possibility of performing thermal mitigation operations, which while prevents the wireless communication device from overheating but also causes performance downgrading of the wireless communication device, and may temporarily stop ongoing missions.

In some example embodiments, the plurality of thermal trending events correspond to a plurality of pre-mitigation exit event, the method further comprising: in response to detecting any one out of the plurality of pre-mitigation exit event, restoring performed thermal pre-mitigation action(s) that is determined based on thermal trending event(s) corresponding to the pre-mitigation exit event. Accordingly, the timing when the thermal reading of the respective thermal sensor reaches the adjusted version of the corresponding first level thermal threshold may be considered a triggering of pre-mitigation enter event, such that he corresponding thermal pre-mitigation action is performed. As the thermal trend is slowed and the temperature reading is reduced, this may warrant that there is no need to keep performing thermal pre-mitigation measures, and therefore, the performed thermal pre-mitigation measures may be restored, such that the wireless communication device may return to full performance. For example, if the thermal sensor provides a thermal reading of a CPU, the corresponding thermal mitigation operation is turning off the CPU, while, the corresponding thermal pre-mitigation action is downgrading operating frequency of the CPU. As such, when the thermal reading of the CPU drops sufficiently to trigger a pre-mitigation exit event, the corresponding thermal pre-mitigation action, i.e., downgrading operating frequency of the CPU, may be restored, which means restoring operating frequency of the CPU back to normal or to the operating frequency before the corresponding thermal pre-mitigation action kicks in.

In some example embodiments, the application status of the wireless communication device indicate a plurality of application scenarios that the wireless communication device matches, the plurality of thermal trending events correspond to the plurality of application scenarios respectively. Accordingly, the thermal management of the wireless communication device is adaptive to application scenarios. In some instances, the plurality of application scenarios comprise voice call over LTE, large data uploading, large data downloading, V2X stack running with heavy computing. As such, as the wireless communication device is operating in a different application status, a different standard for selecting thermal trending events such that the thermal management may focus on component or device that becomes major contributor to the heat generation of the wireless communication device in current application status. As the wireless communication device is implemented for different uses, or deployed in different settings, or deployed in different setups like models or products, the thermal management of the wireless communication device may be adapted flexibly to account for complicated implementations and requirements for quick response as well as quick deployment.

In some example embodiments, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature. Accordingly, the mitigation level accuracy is further improved. The wireless communication device may be deployed in various settings of interactive adjacent components, and the wireless communication device may be deployed in different setups like different models or different products. By calibrating both the corresponding first level thermal threshold and the corresponding second level thermal threshold with respect to a defined chamber temperature, this well designed calibration mechanism helps to come up with dedicated thermal thresholds for each device, ensuring optimal performance for all devices. It is noted that, for the plurality of thermal sensors, in some instances, the calibration is made on each device to ensure the thermal threshold accuracy.

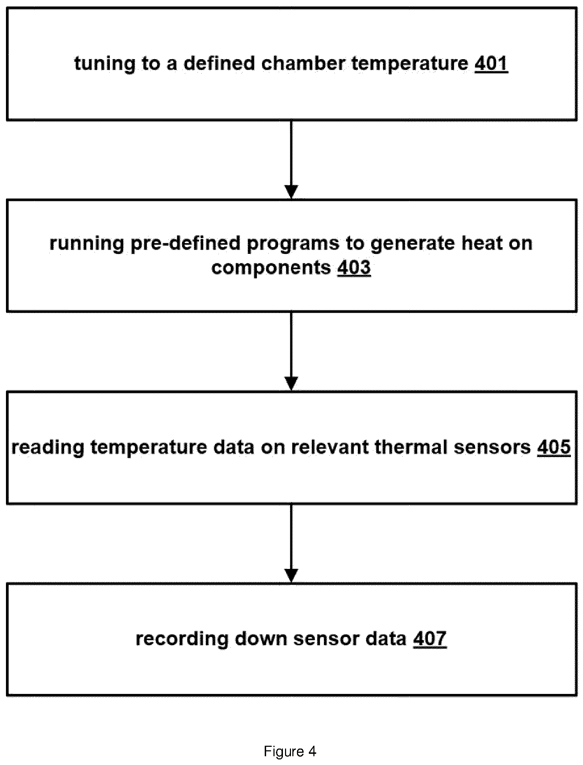

**Figure 4** depicts a method for device thermal calibration according to some embodiments. As depicted in **Figure 4****,** the method includes the following steps.

Step 401: tuning to a defined chamber temperature.

Step 403: running pre-defined programs to generate heat on components.

Step 405: reading temperature data on relevant thermal sensors.

Step 407: recording down sensor data.

Referring to **Figure 4****,** the method for device thermal calibration seeks to further improve the mitigation level accuracy. The wireless communication device may be deployed in various settings of interactive adjacent components, and the wireless communication device may be deployed in different setups like different models or different products. By calibrating both the corresponding first level thermal threshold and the corresponding second level thermal threshold with respect to a defined chamber temperature, this well designed calibration mechanism helps to come up with dedicated thermal thresholds for each device, ensuring optimal performance for all devices.

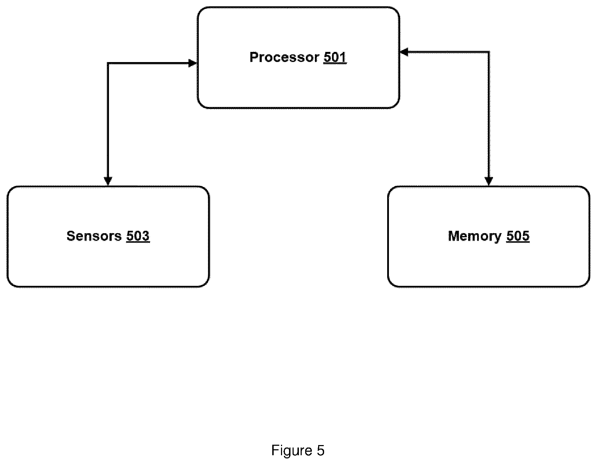

**Figure 5** depicts a system for thermal management of a wireless communication device according to some embodiments. As depicted in Figure 5, the system includes a processor 501 communicatively coupled to a plurality of thermal sensors 503 and a non-transitory memory 505. The non-transistor memory 505 stores computer code that is operable, when executed by the processor 501, to cause the processor 501 to perform the following operations: obtaining a plurality of thermal readings by the plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation; for each of the plurality of thermal sensors respectively, determining whether to perform the corresponding thermal mitigation operation, based on comparing the thermal reading of the thermal sensor and the corresponding second level thermal threshold; for each of the plurality of thermal sensors respectively, determining whether to perform the corresponding thermal pre-mitigation action, base on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

In sum, the system for thermal management of a wireless communication device, as depicted in **Figure 5****,** provides a mechanism that provides both thermal pre-mitigation and thermal mitigation for thermal management of a wireless communication device. By mounting a set of thermal sensors associated with the wireless communication device and collecting a series of data recorded from thermal readings of these thermal sensors, a two-level determining algorithm is applied to process the thermal readings so as to form a basis for judgment for thermal management. This two-level determining algorithm includes a top level, in which one determines whether to perform the corresponding thermal mitigation operation, based on comparing the thermal reading of the thermal sensor and the corresponding second level thermal threshold, and this top level has top priority, therefore making sure that the wireless communication device is prevented from overheating and consequent negative results. The two-level determining algorithm also includes a secondary level, in which one determines whether to perform the corresponding thermal pre-mitigation action, base on comparing the thermal reading of the thermal sensor and an adjusted version of the corresponding first level thermal threshold. By taking the application status of the wireless communication device into calculation, and by determining the adjusted version of the corresponding first level thermal threshold based on thermal trending events associated with the respective thermal sensor, the heating trend of the wireless communication device is slowed down more effectively, the pre-mitigation measures may be started earlier, and the thermal management is dynamically adapted to the application status. Further, as the wireless communication device is operating in a different application status, a different standard for selecting thermal trending events such that the thermal management may focus on component or device that becomes major contributor to the heat generation of the wireless communication device in current application status. As the wireless communication device is implemented for different uses, or deployed in different settings, or deployed in different setups like models or products, the thermal management of the wireless communication device may be adapted flexibly to account for complicated implementations and requirements for quick response as well as quick deployment. The mitigation level accuracy may be improved by pre-defining the first level thermal thresholds and the second level thermal thresholds, taking into consideration the mapping relationships between the thermal sensors and thermal pre-mitigation thresholds, between the thermal sensors and thermal mitigation thresholds, between the thermal sensors and thermal pre-mitigation action, between the thermal sensors and thermal mitigation operations. Also, the mitigation level accuracy may be further improved based on thermal trending predictions, by using models from a combination of application status and relevant sensors to kick in some thermal pre-mitigation actions in advance, such that negative impact by the thermal mitigation operations is reduced, and the overall performance downgrading is also reduced. Accordingly, a mechanism of thermal mitigation for a wireless communication device is provided, the mechanism includes a set of thermal sensors mounted on and selectively surrounding the wireless communication device, a series of data recorded from the thermal readings of these thermal sensors, an algorithm for processing the thermal readings to predict device overheating, and a safeguard of thermal mitigation operations for prevention of overheating.

In some example embodiments, for each of the plurality of thermal sensors respectively, the thermal sensor contributes to the thermal trending prediction indicated by the one or more thermal trending events associated with the thermal sensor. Accordingly, the thermal management of the wireless communication device is improved and imposes a dynamic standard rather than a static standard, to be adaptive to complicated and flexible implementations, and capable of affording quick response and quick deployment.

In some example embodiments, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event. Accordingly, thermal sensors that contribute more may be assigned heavier weights than thermal sensors that contribute less. By using the assigned weights, it becomes easier to select thermal sensors that are main contributors, and this helps to determine whether and what pre-mitigation measures are taken. By taking the application status of the wireless communication device into calculation, and by determining the adjusted version of the corresponding first level thermal threshold based on thermal trending events associated with the respective thermal sensor, the heating trend of the wireless communication device is slowed down more effectively, the pre-mitigation measures may be started earlier, and the thermal management is dynamically adapted to the application status.

In some instances, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor. Accordingly, by increasing or decreasing a weight assigned to a respective thermal sensor, or by maintaining the weight, it becomes easier to reflect the changes of how the thermal sensors contribute to the temperature reading, and how those components tied to these thermal sensors contribute to the heat generation, and therefore, it improves the precision of thermal management algorithm and the mitigation level accuracy. By using models from a combination of application status and relevant sensors to kick in some thermal pre-mitigation actions in advance, such that negative impact by the thermal mitigation operations is reduced, and the overall performance downgrading is also reduced.

In some instances, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor. Accordingly, the adjusted version of the corresponding first level thermal threshold may be set to be a certain percentage smaller, like 5%, than the corresponding first level thermal threshold, so that it becomes easier to trigger the corresponding thermal pre-mitigation action. By having multiple levels, the adjusted version of the corresponding first level thermal threshold provides more flexibility in defining rules and setting strategies for thermal management. For example, the adjusted version of the corresponding first level thermal threshold may be set to be a series of percentages smaller, like 2%, 3%, 5%, 7%, 9%, 10%, than the corresponding first level thermal threshold, and the exact percentage is determined based on the exact level of the multiple levels. As such, as the adjusted version of the corresponding first level thermal threshold is assigned with a heavier weight, this shows that the respective thermal sensor makes more contribution or plays a more important role in the temperature reading, then it warrants using a higher level, like a higher percentage, for determining the adjusted version of the corresponding first level thermal threshold. Therefore, it helps to proactively kick in thermal pre-mitigation measures, therefore imposing a dynamic standard rather than a static standard, to be adaptive to complicated and flexible implementations, and capable of affording quick response and quick deployment.

In some example embodiments, for each of the plurality of thermal sensors respectively, the corresponding first level thermal threshold is lower than the corresponding second level thermal threshold, the corresponding thermal mitigation operation, when preformed, causes a greater performance downgrade than one caused by the corresponding thermal pre-mitigation action when performed. Accordingly, a thermal prediction mechanism based on thermal trending predictions is provided, for proactively launching some thermal pre-mitigation actions in advance, therefore, the heating trend of the wireless communication device is slowed down more effectively, the pre-mitigation measures may be started earlier, and the thermal management is dynamically adapted to the application status. This results in a less frequency and smaller possibility of performing thermal mitigation operations, which while prevents the wireless communication device from overheating but also causes performance downgrading of the wireless communication device, and may temporarily stop ongoing missions.

In some example embodiments, the plurality of thermal trending events correspond to a plurality of pre-mitigation exit event, the method further comprising: in response to detecting any one out of the plurality of pre-mitigation exit event, restoring performed thermal pre-mitigation action(s) that is determined based on thermal trending event(s) corresponding to the pre-mitigation exit event. Accordingly, the timing when the thermal reading of the respective thermal sensor reaches the adjusted version of the corresponding first level thermal threshold may be considered a triggering of pre-mitigation enter event, such that he corresponding thermal pre-mitigation action is performed. As the thermal trend is slowed and the temperature reading is reduced, this may warrant that there is no need to keep performing thermal pre-mitigation measures, and therefore, the performed thermal pre-mitigation measures may be restored, such that the wireless communication device may return to full performance. For example, if the thermal sensor provides a thermal reading of a CPU, the corresponding thermal mitigation operation is turning off the CPU, while, the corresponding thermal pre-mitigation action is downgrading operating frequency of the CPU. As such, when the thermal reading of the CPU drops sufficiently to trigger a pre-mitigation exit event, the corresponding thermal pre-mitigation action, i.e., downgrading operating frequency of the CPU, may be restored, which means restoring operating frequency of the CPU back to normal or to the operating frequency before the corresponding thermal pre-mitigation action kicks in.

In some example embodiments, the application status of the wireless communication device indicate a plurality of application scenarios that the wireless communication device matches, the plurality of thermal trending events correspond to the plurality of application scenarios respectively. Accordingly, the thermal management of the wireless communication device is adaptive to application scenarios. In some instances, the plurality of application scenarios comprise voice call over LTE, large data uploading, large data downloading, V2X stack running with heavy computing. As such, as the wireless communication device is operating in a different application status, a different standard for selecting thermal trending events such that the thermal management may focus on component or device that becomes major contributor to the heat generation of the wireless communication device in current application status. As the wireless communication device is implemented for different uses, or deployed in different settings, or deployed in different setups like models or products, the thermal management of the wireless communication device may be adapted flexibly to account for complicated implementations and requirements for quick response as well as quick deployment.

In some example embodiments, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature. Accordingly, the mitigation level accuracy is further improved. The wireless communication device may be deployed in various settings of interactive adjacent components, and the wireless communication device may be deployed in different setups like different models or different products. By calibrating both the corresponding first level thermal threshold and the corresponding second level thermal threshold with respect to a defined chamber temperature, this well designed calibration mechanism helps to come up with dedicated thermal thresholds for each device, ensuring optimal performance for all devices.

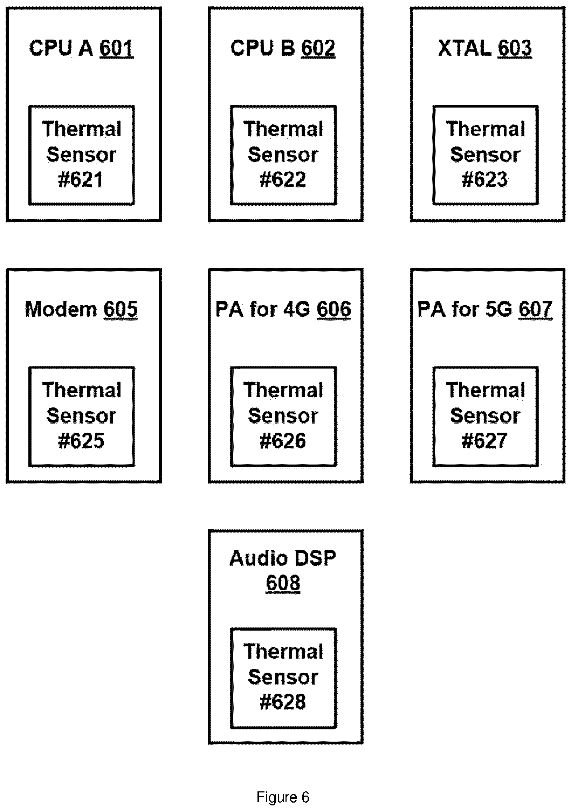

**Figure 6** is a block diagram illustrating a plurality of thermal sensors associated with a wireless communication device according to some embodiments. As depicted, the wireless communication device is associated with several thermal sensors that are tied to certain components, and these components may be deployed within or outside the wireless communication device. There are: CPU A 601 and its associated thermal sensor #621, CPU B 602 and its associated thermal sensor #622, XTAL (External Crystal Oscillator) 603 and its associated thermal sensor #623, Modem 605 and its associated thermal sensor #625, PA (Power Amplifier) for 4G 606 and its associated thermal sensor #626, PA for 5G 607 and its associated thermal sensor #627, Audio DSP 608 and its associated thermal sensor #628. Table A below shows how the thermal sensors and corresponding thresholds are set for defined thermal pre-mitigation actions and thermal mitigation operations with reference to the wireless communication device as depicted by **Figure 6****.**

**Table A**

| Thermal sensor | first level thermal threshold (centigrade) | thermal pre-mitigation action | second level thermal threshold (centigrade) | thermal mitigation operation |
|---|---|---|---|---|
| Thermal sensor #621 for CPU A 601 | 95 | Downgrade operating frequency | 110 | Turn off CPU A 601 |
| Thermal sensor #622 for CPU B 602 | 100 | | 115 | Turn off CPU B 602 |
| Thermal sensor #623 for XTAL 603 | 100 | 2Rx fallback, | 115 | Limited service |
| Thermal sensor #625 for Modem 605 | 95 | LTE Fallback, DL rate throttling | 110 | cellular communication drop, call termination |
| Thermal sensor #626 for PA for 4G 606 | 105 | Tx power backoff, UL rate throttling | 120 | Drop 4G data call |
| Thermal sensor #627 for PA for 5G 607 | 110 | | 125 | Drop 5G data call |
| Thermal sensor #628 for Audio DSP 608 | 100 | Adjust profile | 115 | Stop audio processing |

As shown by Table A above, for a respective thermal sensor, such as CPU A 601, it has a corresponding first level thermal threshold of 95 centigrade, a corresponding second level thermal threshold of 110 centigrade, a corresponding thermal pre-mitigation action (downgrade operating frequency), and a corresponding thermal mitigation operation (turn off CPU A 601). As such, a lower thermal threshold, i.e., the corresponding first level thermal threshold of 95 centigrade, is used to form a basis for judgment on whether to perform the corresponding thermal pre-mitigation action, i.e., downgrading operating frequency, as compared to, a higher thermal threshold, i.e., the corresponding second level thermal threshold of 110 centigrade. With reference to embodiments of this present disclosure, and referring to **Figure 3****,** **Figure 4****,** and **Figure 5****,** a thermal prediction mechanism based on thermal trending predictions is provided, and this thermal prediction mechanism is employed for proactively launching some thermal pre-mitigation actions in advance, therefore, the heating trend of the wireless communication device is slowed down more effectively, the pre-mitigation measures may be started earlier, and the thermal management is dynamically adapted to the application status.

In order to improve mitigation level accuracy, and in consideration of deviations of components and final assembly, each device needs to be calibrated to come up with its dedicated set of thresholds. In some example embodiments, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature. Accordingly, the mitigation level accuracy is further improved. The wireless communication device may be deployed in various settings of interactive adjacent components, and the wireless communication device may be deployed in different setups like different models or different products. By calibrating both the corresponding first level thermal threshold and the corresponding second level thermal threshold with respect to a defined chamber temperature, this well designed calibration mechanism helps to come up with dedicated thermal thresholds for each device, ensuring optimal performance for all devices. Table B below shows calibrated thresholds with reference to Table A for product #1.

**Table B**

| Thermal sensor | first level thermal threshold (centigrade) | thermal pre-mitigation action | second level thermal threshold (centigrade) | thermal mitigation operation |
|---|---|---|---|---|
| Thermal sensor #621 for CPU A 601 | 96 | Downgrade operating frequency | 111 | Turn off CPU A 601 |
| Thermal sensor #622 for CPU B 602 | 101 | | 117 | Turn off CPU B 602 |
| Thermal sensor #623 for XTAL 603 | 103 | 2Rx fallback, LTE Fallback, DL rate throttling | 118 | Limited service |
| Thermal sensor #625 for Modem 605 | 98 | | 115 | cellular communication drop, call termination |
| Thermal sensor #626 for PA for 4G 606 | 102 | Tx power backoff, UL rate throttling | 118 | Drop 4G data call |
| Thermal sensor #627 for PA for 5G 607 | 108 | | 125 | Drop 5G data call |
| Thermal sensor #628 for Audio DSP 608 | 101 | Adjust profile | 117 | Stop audio processing |

Table C below shows calibrated thresholds with reference to Table A for product #2.

**Table C**

| Thermal sensor | first level thermal threshold (centigrade) | thermal pre-mitigation action | second level thermal threshold (centigrade) | thermal mitigation operation |
|---|---|---|---|---|
| Thermal sensor #621 for CPU A 601 | 95 | Downgrade operating frequency | 110 | Turn off CPU A 601 |
| Thermal sensor #622 for CPU B 602 | 102 | | 116 | Turn off CPU B 602 |
| Thermal sensor #623 for XTAL 603 | 105 | 2Rx fallback, | 119 | Limited service |
| Thermal sensor #625 for Modem 605 | 101 | LTE Fallback, DL rate throttling | 116 | cellular communication drop, call termination |
| Thermal sensor #626 for PA for 4G 606 | 103 | Tx power backoff, UL rate throttling | 117 | Drop 4G data call |
| Thermal sensor #627 for PA for 5G 607 | 109 | | 125 | Drop 5G data call |
| Thermal sensor #628 for Audio DSP 608 | 102 | Adjust profile | 118 | Stop audio processing |

With reference to Table B and Table C, thermal thresholds for some thermal sensors are increased, while, thermal thresholds for some other thermal sensors are decreased. The accuracy of the defined sensor thresholds for each device is the basis of thermal mitigation operations and thermal pre-mitigation actions which directly contributes to the performance of the thermal management mechanism based on trending predictions. The two devices, for product #1 and product #2 respectively, will be configured with different sets of thresholds, such that the thermal management of the wireless communication device may be adapted flexibly to account for complicated implementations and requirements for quick response as well as quick deployment. The calibration of thermal thresholds on each product may result in different thermal mitigation and thermal pre-mitigation measures in similar thermal situations, which shows an adaption to the features of the product where the wireless communication device is deployed.

Referring to Table B above, a matrix may be used to show assigned respective weights associated to defined application scenarios, for example, voice call over LTE, uploading large data, downloading large data, V2X stack runs with heavy computing, Audio/Video streaming, GNSS position fixing, etc. Assuming a specific thermal mitigation measure is performed, some sensors on the matrix are not selected sensors and therefore the sensor data from these sensors generally do not contribute to the temperature reading, so the weights for these sensors may set to zero or greatly reduced. Meanwhile, sensors that are selected for contributing to trending events will continue to contribute to the temperature reading, assuming the specific thermal mitigation measure is performed. Therefore, the weights for selected sensors may be maintained or greatly increased. For example, Table D below shows a following matrix that is built with weight (1-5) of each sensor contributing to the listed application scenarios.

**Table D**

| Thermal sensors | voice call over LTE | uploading large data | downloading large data | V2X stack runs with heavy computing |
|---|---|---|---|---|
| Thermal sensor #621 for CPU A 601 | 3 | 2 | 3 | 5 |
| Thermal sensor #622 for CPU B 602 | 3 | 2 | 3 | 5 |
| Thermal sensor #623 for XTAL 603 | 1 | 3 | 4 | 4 |
| Thermal sensor #625 for Modem 605 | 4 | 4 | 5 | 3 |
| Thermal sensor #626 for PA for 4G 606 | 5 | 5 | 3 | 1 |
| Thermal sensor #627 for PA for 5G 607 | 3 | 5 | 3 | 1 |
| Thermal sensor #628 for Audio DSP 608 | 5 | 1 | 1 | 1 |

With reference to Table B and Table D, different measures of the pre-defined thermal mitigation may result in a different standard for selecting the trending events and the type of sensors. For example, in "uploading large data" scenario, thermal sensor #626 for PA for 4G 606 and thermal sensor #627 for PA for 5G 607, are the main contributors to the heat generation so that they could reach the threshold faster than the other sensors. A trending event could be defined mainly based on these two sensors (for example 5% less than the pre-defined threshold) to start the pre-mitigation earlier to slow down the heating trend. The other sensors (e.g. thermal sensor #628 for Audio DSP 608) have minor impact to the running application so that less advance of the threshold can be considered. Accordingly, the adjusted version of the corresponding first level thermal threshold may be set to be a certain percentage smaller, like 5%, than the corresponding first level thermal threshold, so that it becomes easier to trigger the corresponding thermal pre-mitigation action. By having multiple levels, the adjusted version of the corresponding first level thermal threshold provides more flexibility in defining rules and setting strategies for thermal management. Table E below shows a threshold table of trending event for this application scenario.

**Table E**

| Thermal sensor | adjusted version of first level thermal threshold (centigrade) | thermal pre-mitigation action | second level thermal threshold (centigrade) | thermal mitigation operation |
|---|---|---|---|---|
| Thermal sensor #621 for CPU A 601 | 96*98%=94 | Downgrade operating frequency | 111 | Turn off CPU A 601 |
| Thermal sensor #622 for CPU B 602 | 101*98%=99 | | 117 | Turn off CPU B 602 |
| Thermal sensor #623 for XTAL 603 | 103*97%=100 | 2Rx fallback, LTE Fallback, DL rate throttling | 118 | Limited service |
| Thermal sensor #625 for Modem 605 | 98*96%=94 | | 115 | cellular communication drop, call termination |
| Thermal sensor #626 for PA for 4G 606 | 102*95%=97 | Tx power backoff, UL rate throttling | 118 | Drop 4G data call |
| Thermal sensor #627 for PA for 5G 607 | 108*95%=103 | | 125 | Drop 5G data call |
| Thermal sensor #628 for Audio DSP 608 | 101*99%=100 | Adjust profile | 117 | Stop audio processing |

Referring to Table E, as the adjusted version of the corresponding first level thermal threshold is assigned with a heavier weight, this shows that the respective thermal sensor makes more contribution or plays a more important role in the temperature reading, then it warrants using a higher level, like a higher percentage, for determining the adjusted version of the corresponding first level thermal threshold. Therefore, it helps to proactively kick in thermal pre-mitigation measures, therefore imposing a dynamic standard rather than a static standard, to be adaptive to complicated and flexible implementations, and capable of affording quick response and quick deployment. Multiple application scenarios can be concurrent sometimes, so that multiple such matrix should be maintained and switch between each other depending on the pre-mitigation actions that are already taken. For example, after the thermal pre-mitigation action of "Tx power backoff, UL rate throttling" for thermal sensor #626 for PA for 4G 606 or thermal sensor #627 for PA for 5G 607 has taken, it can switch to use another thermal sensor #623 for XTAL 603 central matrix if "downloading data" is also happening at the same time. Flexible strategies could be applied to manage such complex combinations based on the principle above.

The detailed embodiments provided in the present disclosure can be implemented by any one or a combination of hardware, software, firmware, or solid-state logic circuits, and can be implemented in combination with signal processing, control, and/or dedicated circuits. The equipment(s) or device(s) provided in the detailed embodiments of the present disclosure may include one or more processors (a microprocessor, a controller, a digital signal processor (DSP), an application specific integrated circuit (ASIC), a field programmable gate array (FPGA) and so on), and these processors process various computer-executable instructions to control the operations of the equipment(s) or device(s). The equipment(s) or device(s) provided in the detailed embodiments of the present disclosure may include a system bus or a data transmission system that couples various components together. The system bus may include any one of different bus structures or a combination of different bus structures, such as a memory bus or a memory controller, a peripheral bus, a universal serial bus, and/or a process or a local bus using any of a variety of bus architectures. The equipment(s) or device(s) provided in the detailed embodiments of the present disclosure may be provided separately, may also be a part of the system, or may be a part of other equipment or devices.

The detailed embodiments provided by the present disclosure may include a computer-readable storage medium or a combination with a computer-readable storage medium, such as one or more storage devices capable of providing non-transitory data storage. The computer-readable storage medium/storage device may be configured to store data, programmers and/or instructions, which when executed by the processor of the equipment(s) or device(s) provided in the present disclosure, would allow the equipment(s) or device(s) to implement related operations. The computer-readable storage medium/storage device may include one or more of the following characteristics: volatile, non-volatile, dynamic, static, read/write, read-only, random access, sequential access, location addressability, file addressability and content addressability. In one or more exemplary embodiments, the computer-readable storage medium/storage device may be integrated into the equipment(s) or device(s) provided in the detailed embodiments of the present disclosure or belong to a public system. The computer-readable storage media/storage devices can include optical storage devices, semiconductor storage devices and/or magnetic storage devices, etc., and can also include random access memory (RAM), flash memory, read-only memory (ROM), erasable and programmable read-only memory (EPROM), electrically erasable programmable read-only memory (EEPROM), registers, hard disk, removable disk, recordable and/or rewritable compact disc (CD), digital versatile disc (DVD), large capacity storage medium device or any other form of suitable storage medium.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method comprising:
obtaining (301) a plurality of thermal readings by a plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation;
for each of the plurality of thermal sensors respectively, determining (303) whether to perform the corresponding thermal mitigation operation, based on comparing the thermal reading of the thermal sensor and the corresponding second level thermal threshold;
for each of the plurality of thermal sensors respectively, determining (305) whether to perform the corresponding thermal pre-mitigation action, based on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

2. The method according to claim 1, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event.

3. The method according to claim 2, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor.

4. The method according to claim 2, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor.

5. The method according to claim 1, the plurality of thermal trending events correspond to a plurality of pre-mitigation exit events, the method further comprising:
in response to detecting any one out of the plurality of pre-mitigation exit events, restoring performed thermal pre-mitigation action(s) that is determined based on thermal trending event(s) corresponding to the pre-mitigation exit event, wherein the pre-mitigation exit event indicates dropping of the thermal reading of the thermal sensor.

6. The method according to claim 1, the application status of the wireless communication device indicates a plurality of application scenarios that the wireless communication device matches, the plurality of thermal trending events correspond to the plurality of application scenarios respectively, the plurality of application scenarios comprise voice call over LTE.

7. The method according to claim 1, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature.

8. A system comprising:
a processor (501) communicatively coupled to a plurality of thermal sensors (503) and a non-transitory memory (505), wherein the non-transitory memory (505) stores computer code that is operable, when executed by the processor (501), to cause the processor (501) to:
obtaining (301) a plurality of thermal readings by the plurality of thermal sensors associated with a wireless communication device, respectively, each of the plurality of thermal sensors having a corresponding first level thermal threshold and a corresponding second level thermal threshold, each of the plurality of thermal sensors having a corresponding thermal pre-mitigation action and a corresponding thermal mitigation operation;
for each of the plurality of thermal sensors respectively, determining (303) whether to perform the corresponding thermal mitigation operation, based on comparing the thermal reading of the thermal sensor and the corresponding second level thermal threshold;
for each of the plurality of thermal sensors respectively, determining (305) whether to perform the corresponding thermal pre-mitigation action, based on comparing the thermal reading of the thermal sensor and an adjusted version of the corresponding first level thermal threshold, wherein the adjusted version of the corresponding first level thermal threshold is determined based on one or more thermal trending events associated with the thermal sensor out of a plurality of thermal trending events, each of the plurality of thermal trending events indicating thermal trending prediction based on an application status of the wireless communication device.

9. The system according to claim 8, for each of the plurality of thermal sensors respectively, the thermal sensor contributes to the thermal trending prediction indicated by the one or more thermal trending events associated with the thermal sensor.

10. The system according to claim 8, for each of the plurality of thermal trending events, one or more thermal sensors associated with the thermal trending event out of the plurality of thermal sensors are assigned weights respectively, based on how the one or more thermal sensors contribute to the thermal trending prediction indicated by the thermal trending event.

11. The system according to claim 10, for each of the plurality of thermal sensors respectively, the adjusted version of the corresponding first level thermal threshold is determined based on the corresponding first level thermal threshold and the weight assigned to the thermal sensor with respect to the one or more thermal trending events associated with the thermal sensor.

12. The system according to claim 10, for each of the plurality of thermal sensors respectively, the one or more thermal trending events associated with the thermal sensor have multiple thermal trending events, the adjusted version of the corresponding first level thermal threshold has multiple levels, the multiple levels of the adjusted version of the corresponding first level thermal threshold are determined based on the corresponding first level thermal threshold and the weights assigned to the thermal sensor with respect to the multiple thermal trending events associated with the thermal sensor.

13. The system according to claim 8, the plurality of thermal trending events correspond to a plurality of pre-mitigation exit events, the system further comprising:
in response to detecting any one out of the plurality of pre-mitigation exit events, restoring performed thermal pre-mitigation action(s) that is determined based on thermal trending event(s) corresponding to the pre-mitigation exit event, wherein the pre-mitigation exit event indicates dropping of the thermal reading of the thermal sensor.

14. The system according to claim 8, the application status of the wireless communication device indicate a plurality of application scenarios that the wireless communication device matches, the plurality of thermal trending events correspond to the plurality of application scenarios respectively, the plurality of application scenarios comprise voice call over LTE.

15. The system according to claim 8, the plurality of thermal sensors are deployed in the wireless communication device or component(s) surrounding the wireless communication device, and, for each of the plurality of thermal sensors respectively, the corresponding first level thermal threshold and the corresponding second level thermal threshold are both calibrated with respect to a defined chamber temperature.

## Patentansprüche

1. Verfahren, umfassend:
Erhalten (301) einer Vielzahl von Wärmewerten durch eine Vielzahl von Wärmesensoren, die jeweils einer drahtlosen Kommunikationsvorrichtung zugehörig sind, wobei jeder der Vielzahl von Wärmesensoren einen entsprechenden Wärmeschwellenwert ersten Grades und einen entsprechenden Wärmeschwellenwert zweiten Grades aufweist, wobei jeder der Vielzahl von Wärmesensoren eine entsprechende Wärme-Vorminderungsmaßnahme und einen entsprechenden Wärme-Minderungsbetrieb aufweist;
jeweils für jeden der Vielzahl von Wärmesensoren, Bestimmen (303), ob der entsprechende Wärme-Minderungsbetrieb durchgeführt werden soll, auf Basis des Vergleichens des Wärmewerts des Wärmesensors und des entsprechenden Wärmeschwellenwerts zweiten Grades;
jeweils für jeden der Vielzahl von Wärmesensoren, Bestimmen (305), ob die entsprechende Wärme-Vorminderungsmaßnahme durchgeführt werden soll, auf Basis des Vergleichens des Wärmewerts des Wärmesensors und einer angepassten Version des entsprechenden Wärmeschwellenwerts ersten Grades, wobei die angepasste Version des entsprechenden Wärmeschwellenwerts ersten Grades auf Basis eines oder mehrerer dem Wärmesensor zugehörigen Wärmetrendereignisse aus einer Vielzahl von Wärmetrendereignissen bestimmt wird, wobei jedes der Vielzahl von Wärmetrendereignissen eine Wärmetrendvorhersage auf Basis eines Anwendungsstatus der drahtlosen Kommunikationsvorrichtung angibt.

2. Verfahren nach Anspruch 1, wobei für jedes der Vielzahl von Wärmetrendereignissen einem oder mehreren dem Wärmetrendereignis zugehörigen Wärmesensoren aus der Vielzahl von Wärmesensoren jeweils Gewichtungen zugewiesen werden, auf Basis darauf, wie der eine oder die mehreren Wärmesensoren zu der durch das Wärmetrendereignis angegebenen Wärmetrendvorhersage beitragen.

3. Verfahren nach Anspruch 2, wobei jeweils für jeden der Vielzahl von Wärmesensoren die angepasste Version des entsprechenden Wärmeschwellenwerts ersten Grades auf Basis des entsprechenden Wärmeschwellenwerts ersten Grades und der Gewichtung, die dem Wärmesensor in Bezug auf das eine oder die mehreren dem Wärmesensor zugehörigen Wärmetrendereignisse zugewiesen ist, bestimmt wird.

4. Verfahren nach Anspruch 2, wobei jeweils für jeden der Vielzahl von Wärmesensoren, das eine oder die mehreren dem Wärmesensor zugehörigen Wärmetrendereignisse multiple Wärmetrendereignisse aufweisen, die angepasste Version des entsprechenden Wärmeschwellenwerts ersten Grades multiple Grade aufweist, die multiplen Grade der angepassten Version des entsprechenden Wärmeschwellenwerts ersten Grades auf Basis des entsprechenden Wärmeschwellenwerts ersten Grades und der Gewichtungen, die dem Wärmesensor in Bezug auf die dem Wärmesensor zugehörigen multiplen Wärmetrendereignisse zugewiesen sind, bestimmt wird.

5. Verfahren nach Anspruch 1, wobei die Vielzahl von Wärmetrendereignissen einer Vielzahl von Vorminderungsbeendigungsereignissen entspricht, das Verfahren ferner umfassend:
als Antwort auf das Detektieren eines aus der Vielzahl von Vorminderungsbeendigungsereignissen, Wiederherstellen von (einer) durchgeführten Wärme-Vorminderungsmaßnahme(n), die auf Basis eines/von Wärmetrendereignisses/- en bestimmt wird/werden, das/die dem Vorminderungsbeendigungsereignis entspricht/entsprechen, wobei das Vorminderungsbeendigungsereignis das Abfallen des Wärmewerts des Wärmesensors angibt.

6. Verfahren nach Anspruch 1, wobei der Anwendungsstatus der drahtlosen Kommunikationsvorrichtung eine Vielzahl von Anwendungsszenarien angibt, zu denen die drahtlose Kommunikationsvorrichtung passt, wobei die Vielzahl von Wärmetrendereignissen jeweils der Vielzahl von Anwendungsszenarien entsprechen, wobei die Vielzahl von Anwendungsszenarien einen Sprachanruf über LTE umfassen.

7. Verfahren nach Anspruch 1, wobei die Vielzahl von Wärmesensoren in der drahtlosen Kommunikationsvorrichtung oder in (einer) Komponente(n), die die drahtlose Kommunikationsvorrichtung umgibt/umgeben, genutzt werden und jeweils für jeden der Vielzahl von Wärmesensoren der entsprechende Wärmeschwellenwert ersten Grades und der entsprechende Wärmeschwellenwert zweiten Grades beide in Bezug auf eine definierte Kammertemperatur kalibriert sind.

8. System, umfassend:
einen Prozessor (501), der kommunizierend mit einer Vielzahl von Wärmesensoren (503) und einem nicht flüchtigen Speicher (505) gekoppelt ist, wobei der nicht flüchtige Speicher (505) Computercode speichert, der bei Ausführung durch den Prozessor (501) dazu betriebsfähig ist, den Prozessor (501) zu veranlassen:
Erhalten (301) einer Vielzahl von Wärmewerten durch die Vielzahl von Wärmesensoren, die jeweils einer drahtlosen Kommunikationsvorrichtung zugehörig sind, wobei jeder der Vielzahl von Wärmesensoren einen entsprechenden Wärmeschwellenwert ersten Grades und einen entsprechenden Wärmeschwellenwert zweiten Grades aufweist, wobei jeder der Vielzahl von Wärmesensoren eine entsprechende Wärme-Vorminderungsmaßnahme und einen entsprechenden Wärme-Minderungsbetrieb aufweist;
jeweils für jeden der Vielzahl von Wärmesensoren, Bestimmen (303), ob der entsprechende Wärme-Minderungsbetrieb durchgeführt werden soll, auf Basis des Vergleichens des Wärmewerts des Wärmesensors und des entsprechenden Wärmeschwellenwerts zweiten Grades;
jeweils für jeden der Vielzahl von Wärmesensoren, Bestimmen (305), ob die entsprechende Wärme-Vorminderungsmaßnahme durchgeführt werden soll, auf Basis des Vergleichens des Wärmewerts des Wärmesensors und einer angepassten Version des entsprechenden Wärmeschwellenwerts ersten Grades, wobei die angepasste Version des entsprechenden Wärmeschwellenwerts ersten Grades auf Basis eines oder mehrerer dem Wärmesensor zugehörigen Wärmetrendereignisse aus einer Vielzahl von Wärmetrendereignissen bestimmt wird, wobei jedes der Vielzahl von Wärmetrendereignissen eine Wärmetrendvorhersage auf Basis eines Anwendungsstatus der drahtlosen Kommunikationsvorrichtung angibt.

9. System nach Anspruch 8, wobei jeweils für jeden der Vielzahl von Wärmesensoren der Wärmesensor zu der Wärmetrendvorhersage beiträgt, die durch das eine oder die mehreren dem Wärmesensor zugehörigen Wärmetrendereignisse angegeben wird.

10. System nach Anspruch 8, wobei für jedes der Vielzahl von Wärmetrendereignissen einem oder mehreren dem Wärmetrendereignis zugehörigen Wärmesensoren aus der Vielzahl von Wärmesensoren jeweils Gewichtungen zugewiesen werden, auf Basis darauf, wie der eine oder die mehreren Wärmesensoren zu der durch das Wärmetrendereignis angegebenen Wärmetrendvorhersage beitragen.

11. System nach Anspruch 10, wobei jeweils für jeden der Vielzahl von Wärmesensoren die angepasste Version des entsprechenden Wärmeschwellenwerts ersten Grades auf Basis des entsprechenden Wärmeschwellenwerts ersten Grades und der Gewichtung, die dem Wärmesensor in Bezug auf das eine oder die mehreren dem Wärmesensor zugehörigen Wärmetrendereignisse zugewiesen ist, bestimmt wird.

12. System nach Anspruch 10, wobei jeweils für jeden der Vielzahl von Wärmesensoren, das eine oder die mehreren dem Wärmesensor zugehörigen Wärmetrendereignisse multiple Wärmetrendereignisse aufweisen, die angepasste Version des entsprechenden Wärmeschwellenwerts ersten Grades multiple Grade aufweist, die multiplen Grade der angepassten Version des entsprechenden Wärmeschwellenwerts ersten Grades auf Basis des entsprechenden Wärmeschwellenwerts ersten Grades und der Gewichtungen, die dem Wärmesensor in Bezug auf die dem Wärmesensor zugehörigen multiplen Wärmetrendereignisse zugewiesen sind, bestimmt wird.

13. System nach Anspruch 8, wobei die Vielzahl von Wärmetrendereignissen einer Vielzahl von Vorminderungsbeendigungsereignissen entspricht, das System ferner umfassend:
als Antwort auf das Detektieren eines beliebigen aus der Vielzahl von Vorminderungsbeendigungsereignissen, Wiederherstellen von (einer) durchgeführten Wärme-Vorminderungsmaßnahme(n), die auf Basis eines/von Wärmetrendereignisses/- en bestimmt wird/werden, die dem Vorminderungsbeendigungsereignis entspricht/entsprechen, wobei das Vorminderungsbeendigungsereignis das Abfallen des Wärmewerts des Wärmesensors angibt.

14. System nach Anspruch 8, wobei der Anwendungsstatus der drahtlosen Kommunikationsvorrichtung eine Vielzahl von Anwendungsszenarien angibt, zu denen die drahtlose Kommunikationsvorrichtung passt, wobei die Vielzahl von Wärmetrendereignissen jeweils der Vielzahl von Anwendungsszenarien entsprechen, wobei die Vielzahl von Anwendungsszenarien einen Sprachanruf über LTE umfassen.

15. System nach Anspruch 8, wobei die Vielzahl von Wärmesensoren in der drahtlosen Kommunikationsvorrichtung oder in (einer) Komponente(n), die die drahtlose Kommunikationsvorrichtung umgibt/umgeben, genutzt werden und jeweils für jeden der Vielzahl von Wärmesensoren der entsprechende Wärmeschwellenwert ersten Grades und der entsprechende Wärmeschwellenwert zweiten Grades beide in Bezug auf eine definierte Kammertemperatur kalibriert sind.

## Revendications

1. Procédé comprenant :
l'obtention (301) d'une pluralité de lectures thermiques par une pluralité de capteurs thermiques associés à un dispositif de communication sans fil, respectivement, chacun de la pluralité de capteurs thermiques présentant un seuil thermique de premier niveau correspondant et un seuil thermique de deuxième niveau correspondant, chacun de la pluralité de capteurs thermiques présentant une action de préatténuation thermique correspondante et une opération d'atténuation thermique correspondante ;
pour chacun de la pluralité de capteurs thermiques respectivement, la détermination (303) d'effectuer l'opération d'atténuation thermique correspondante, sur la base de la comparaison de la lecture thermique du capteur thermique et du seuil thermique de deuxième niveau correspondant ;
pour chacun de la pluralité de capteurs thermiques respectivement, la détermination (305) d'effectuer l'action de préatténuation thermique correspondante, sur la base de la comparaison de la lecture thermique du capteur thermique et d'une version ajustée du seuil thermique de premier niveau correspondant, dans laquelle la version ajustée du seuil thermique de premier niveau correspondant est déterminée sur la base d'un ou plusieurs évènements de tendance thermique associés au capteur thermique parmi une pluralité d'évènements de tendance thermique, chacun de la pluralité d'évènements de tendance thermique en indiquant une prédiction de tendance thermique sur la base d'un état d'application du dispositif de communication sans fil.

2. Procédé selon la revendication 1, pour chacun de la pluralité d'évènements de tendance thermique, un ou plusieurs capteurs thermiques associés à l'évènement de tendance thermique parmi la pluralité de capteurs thermiques sont attribués à des poids respectivement, sur la base de la manière dont le ou les capteurs thermiques contribuent à la prédiction de tendance thermique indiquée par l'évènement de tendance thermique.

3. Procédé selon la revendication 2, pour chacun de la pluralité de capteurs thermiques respectivement, la version ajustée du seuil thermique de premier niveau correspondant est déterminée sur la base du seuil thermique de premier niveau correspondant et du poids attribué au capteur thermique par rapport au ou aux évènements de tendance thermique associés au capteur thermique.

4. Procédé selon la revendication 2, pour chacun de la pluralité de capteurs thermiques respectivement, le ou les évènements de tendance thermique associés au capteur thermique présentent de multiples évènements de tendance thermique, la version ajustée du seuil thermique de premier niveau correspondant présente de multiples niveaux, les multiples niveaux de la version ajustée du seuil thermique de premier niveau correspondant sont déterminés sur la base du seuil thermique de premier niveau correspondant et des poids attribués au capteur thermique par rapport aux multiples évènements de tendance thermique associés au capteur thermique.

5. Procédé selon la revendication 1, la pluralité d'évènements de tendance thermique correspond à une pluralité d'évènements de sortie de préatténuation, le procédé comprenant en outre :
en réponse à la détection de l'un quelconque parmi la pluralité d'évènements de sortie de préatténuation, la restauration d'action(s) de préatténuation thermique effectuée(s) qui est déterminée sur la base d'évènement(s) de tendance thermique correspondant à l'évènement de sortie de préatténuation, dans laquelle l'évènement de sortie de préatténuation indique l'abandon de la lecture thermique du capteur thermique.

6. Procédé selon la revendication 1, l'état d'application du dispositif de communication sans fil indique une pluralité de scénarios d'application que le dispositif de communication sans fil met en correspondance, la pluralité d'évènements de tendance thermique correspond à la pluralité de scénarios d'application respectivement, la pluralité de scénarios d'application comprend un appel vocal sur LTE.

7. Procédé selon la revendication 1, la pluralité de capteurs thermiques sont déployés dans le dispositif de communication sans fil ou un (des) composant(s) entourant le dispositif de communication sans fil, et, pour chacun de la pluralité de capteurs thermiques respectivement, le seuil thermique de premier niveau correspondant et le seuil thermique de deuxième niveau correspondant sont tous deux étalonnés par rapport à une température de chambre définie.

8. Système comprenant :
un processeur (501) couplé en communication à une pluralité de capteurs thermiques (503) et une mémoire non transitoire (505), dans lequel la mémoire non transitoire (505) stocke un code informatique qui peut fonctionner, lorsqu'il est exécuté par le processeur (501), pour amener le processeur (501) à :
obtenir (301) une pluralité de lectures thermiques par une pluralité de capteurs thermiques associés à un dispositif de communication sans fil, respectivement, chacun de la pluralité de capteurs thermiques présentant un seuil thermique de premier niveau correspondant et un seuil thermique de deuxième niveau correspondant, chacun de la pluralité de capteurs thermiques présentant une action de préatténuation thermique correspondante et une opération d'atténuation thermique correspondante ;
pour chacun de la pluralité de capteurs thermiques respectivement, déterminer (303) d'effectuer l'opération d'atténuation thermique correspondante, sur la base de la comparaison de la lecture thermique du capteur thermique et du seuil thermique de deuxième niveau correspondant ;
pour chacun de la pluralité de capteurs thermiques respectivement, déterminer (305) d'effectuer l'action de préatténuation thermique correspondante, sur la base de la comparaison de la lecture thermique du capteur thermique et d'une version ajustée du seuil thermique de premier niveau correspondant, dans laquelle la version ajustée du seuil thermique de premier niveau correspondant est déterminée sur la base d'un ou plusieurs évènements de tendance thermique associés au capteur thermique parmi une pluralité d'évènements de tendance thermique, chacun de la pluralité d'évènements de tendance thermique en indiquant une prédiction de tendance thermique sur la base d'un état d'application du dispositif de communication sans fil.

9. Système selon la revendication 8, pour chacun de la pluralité de capteurs thermiques respectivement, le capteur thermique contribue à la prédiction de tendance thermique indiquée par le ou les évènements de tendance thermique associés au capteur thermique.

10. Système selon la revendication 8, pour chacun de la pluralité d'évènements de tendance thermique, un ou plusieurs capteurs thermiques associés à l'évènement de tendance thermique parmi la pluralité de capteurs thermiques sont attribués à des poids respectivement, sur la base de la manière dont le ou les capteurs thermiques contribuent à la prédiction de tendance thermique indiquée par l'évènement de tendance thermique.

11. Système selon la revendication 10, pour chacun de la pluralité de capteurs thermiques respectivement, la version ajustée du seuil thermique de premier niveau correspondant est déterminée sur la base du seuil thermique de premier niveau correspondant et du poids attribué au capteur thermique par rapport au ou aux évènements de tendance thermique associés au capteur thermique.

12. Système selon la revendication 10, pour chacun de la pluralité de capteurs thermiques respectivement, le ou les évènements de tendance thermique associés au capteur thermique présentent de multiples évènements de tendance thermique, la version ajustée du seuil thermique de premier niveau correspondant présente de multiples niveaux, les multiples niveaux de la version ajustée du seuil thermique de premier niveau correspondant sont déterminés sur la base du seuil thermique de premier niveau correspondant et des poids attribués au capteur thermique par rapport aux multiples évènements de tendance thermique associés au capteur thermique.

13. Système selon la revendication 8, la pluralité d'évènements de tendance thermique correspond à une pluralité d'évènements de sortie de préatténuation, le système comprenant en outre :
en réponse à la détection de l'un quelconque parmi la pluralité d'évènements de sortie de préatténuation, la restauration d'action(s) de préatténuation thermique effectuée(s) qui est déterminée sur la base d'évènement(s) de tendance thermique correspondant à l'évènement de sortie de préatténuation, dans laquelle l'évènement de sortie de préatténuation indique l'abandon de la lecture thermique du capteur thermique.

14. Système selon la revendication 8, les états d'application du dispositif de communication sans fil indiquent une pluralité de scénarios d'application que le dispositif de communication sans fil met en correspondance, la pluralité d'évènements de tendance thermique correspond à la pluralité de scénarios d'application respectivement, la pluralité de scénarios d'application comprend un appel vocal sur LTE.

15. Système selon la revendication 8, la pluralité de capteurs thermiques sont déployés dans le dispositif de communication sans fil ou un (des) composant(s) entourant le dispositif de communication sans fil, et, pour chacun de la pluralité de capteurs thermiques respectivement, le seuil thermique de premier niveau correspondant et le seuil thermique de deuxième niveau correspondant sont tous deux étalonnés par rapport à une température de chambre définie.
